Europäisches Patentamt

European Patent Office

Office européen des brevets

(11) Publication number: **0 260 288 B1**

# EUROPEAN PATENT SPECIFICATION

(45) Date of publication of the patent specification:
31.01.90

(51) Int. Cl.⁴: **F 16 K 5/06**

(21) Application number: **87901412.4**

(22) Date of filing: **27.02.87**

(86) International application number:
**PCT/DK 87/00021**

(87) International publication number:
**WO 87/05373 (11.09.87 Gazette 87/20)**

(54) **METHOD OF MOULDING A BALL VALVE BY MOUNTING ELEMENTS HELD BY CORES AND TOOL CONSTITUTED BY SAID CORES.**

(30) Priority: **28.02.86 DK 933/86**

(43) Date of publication of application:
**23.03.88 Bulletin 88/12**

(45) Publication of the grant of the patent:
**31.01.90 Bulletin 90/5**

(84) Designated Contracting States:
**AT BE CH DE FR GB IT LI LU NL SE**

(56) References cited:
**DE-A- 2 917 200**
**DE-B- 1 750 172**
**SE-B- 363 157**
**SE-B- 415 598**
**SE-B- 424 668**

(73) Proprietor: **Frese armatur A/S, Soroevej 6,
DK-4200 Slagelse (DK)**

(72) Inventor: **MADSEN, Ole, Erik, Gormsvej 27,
DK-4200 Slagelse (DK)**
Inventor: **MOLLER, Svend, Langgade 74,
DK-4700 Naestved (DK)**

(74) Representative: **Rostovanyl, Peter et al, AWAPATENT
AB Box 5117, S-200 71 Malmö (SE)**

## Description

The application relates to a valve of the kind comprising an outer valve housing with inlet and outlet fluid passages, an inner valve housing with a valve body bearing which through openings is in fluid connection with the inlet and outlet passages, and a valve body which is fluid tight and movably embedded in the valve body bearing and adapted to be moved with a first position where it shuts off the connection between at least some of the openings and at least one other position wherein through at least one passage designed in the valve bearing it provides fluid connection between at least some of the openings which are shut off from each other in the first position. Examples of such valves (see for instance DE-A-2917200) are slide valves, plug valves with conical or cylindrical plug or ball plug valves. The invention will be explained in the following with reference to its application by a ball plug valve but it is evident that the invention may also be applicable by other valves falling within the definition given above.

When assembling ball plug valves it is necessary for easily understandable geometrical reasons that the inner valve housing is designed in at least two parts which in connection with the valve assembly work are arranged on each its side of or around the ball plug. The work of assembling the various parts of the inner valve housing constitutes a considerable part of the work of assembling the entire valve and the necessity of designing the inner valve housing in two or more parts also entails the need for sealings between these various parts apart from the necessity of sealing the inner valve housing against the valve body and the outer valve housing.

It is therefore an object to provide a design of a valve of the kind recited above whereby it is achieved partly that the work of assembling the valve has been considerably simplified and that the problem of relative sealing between the various parts of the inner valve housing is avoided and this object is achieved in that of the two parts whereof the first is the inner valve housing and the other the valve body, one of the parts is formed, for example by moulding, against at least the surface of the other part constituting the bearing surface of the valve body bearing or the surface cooperating therewith. By forming or moulding the inner valve housing against the valve body or vice versa it is achieved partly that it is no longer necessary to design the inner valve housing in two or more parts partly that the work of assembling the valve is substantially simplified since the moulding process itself replaces the work of assembling the inner valve housing and the valve body.

In ball plug valves the surface on the inner valve housing cooperating with the ball plug constitutes an inwardly extending ball surface which if having to be made for example by machining would require difficult machine operations. By ball plug valves there is therefore preferred an embodiment where the inner valve housing is formed against the relevant surface on the valve body so that only one outer ball surface, namely on the valve body, will have to be formed, and the inner ball surface of the inner valve housing can then be moulded against same.

By an embodiment where the outer valve housing is designed in one piece and has an opening, preferably a side opening, through which the valve body has been inserted before forming the inner valve housing around the valve body and within the outer valve housing, there is obtained a very simple manufacture of the valve since this will only comprise three parts which will each only have to be designed in one single piece. A valve designed in this manner is assembled by simply arranging the valve body and the required cores and form parts in place in the outer valve housing whereafter the inner valve housing is moulded around the valve body and within the outer valve housing and where finally the cores and the form parts are removed.

By a valve wherein the outer valve housing and the valve body are of metal whereas the inner valve housing is of plastic moulded around the valve body it is advantageous that the inner valve housing is formed with such dimensions in the non-mounted state and that by insertion in the outer valve housing and perhaps clamping thereof it is compressed in such a manner that through the bearing surface of the valve body bearing there is exerted increased pressure on the valve body. By a suitable choice of plastic material the inner valve housing may thereby show a certain resilience which can be used for improving the sealing towards the valve body and the outer valve housing.

A good sealing between the inner valve housing and the outer valve housing can also be achieved by a valve of the kind where the inner valve housing has outwardly facing first contact faces cooperating with inwardly facing second contact faces in the outer valve housing if on the first and/or second contact faces there is designed at least one circumferential elevation engaging in the assembled valve with a certain force the opposite contact face. In this manner the circumferential elevations will form a kind of line sealing between the respective parts.

By a method for producing a valve it is advantageous that the inner valve housing or valve body is formed, e.g. by moulding, against the surface or surfaces in and/or on the valve body and the inner valve housing, respectively, with which the inner valve housing and the valve body, respectively, cooperate in the assembled valve, and against other surfaces in and/or on and/or similar to surfaces in and/or on other parts of the assembled valve such as the outer valve housing and in and/or on cores, e.g. moulding cores, for forming the required openings and/or passages in the inner valve housing and the valve bearing, respectively.

By a method for producing a valve it is advantageous by a first embodiment that the valve body is initially shaped to its final shape at least as regards the surfaces intended for cooperation with the inner valve housing whereafter the inner valve housing, if desired simultaneously with the outer valve housing, is shaped by moulding around the valve body by using the cores which are required for forming the passages made in the valve housing for connecting the inlet and outlet passages and the valve body and any cores for keeping moulding mass clear of the passages formed in the valve body.

By another method for producing a valve it is advantageous that only the inner valve housing is moulded around the valve body, namely in a separate mould, in that as a separate mould there is used such mould and/or that there is used such a moulding mass and the moulding is performed in such a manner that at least one of the outer dimensions on the so moulded inner valve housing is somewhat larger than the corresponding inner dimension or dimensions in the outer valve housing when this has been assembled around the inner valve housing.

By a method for producing a valve it is by a third embodiment advantageous to proceed by the following steps: there is used an outer valve housing with an opening, preferably a side opening, through which the valve body may be inserted to take a position corresponding to its functional position, the valve body is inserted through the said opening to take the mentioned position and is retained there, and the required cores and any other moulding cores are arranged for forming a moulding chamber which is defined by the valve body, inner surfaces on the outer valve housing and the mentioned cores, the inner valve housing is moulded in the mentioned moulding chamber, and the cores and any moulding cores are removed.

Finally, by a method for producing a valve it is advantageous by a fourth embodiment that the surfaces on that of the two parts, namely the inner valve housing and the valve body, against which the other part is to be formed before the mouldings are polished and/or provided with a coating of a slip agent or friction reducing agent and/or are plated with a metal with a low coefficient of friction relative to the material whereof the other part is to be formed.

The application also relates to a method for mounting a valve body having the shape of a body of revolution in a valve housing where there are great tolerances between the two parts, by which method the two parts are retained in correct interrelationship, the valve housing is temporarily closed in relation to its outer surroundings, and the spaces between the valve body and the valve housing are subsequently filled with a moulding mass which is anchored in the valve housing.

By the method it is in this case advantageous to use a fusible or meltable moulding mass which is pressed in its liquid state and as a valve body and a valve housing to use a valve body and a valve housing made of materials having a melting point which is higher than the melting point of the moulding mass.

By the method for mounting a valve body it is furthermore advantageous to use a chemically hardenable moulding mass.

It is moreover advantageous by the method for mounting the valve body to retain the parts in interrelationship by means of cores which in the position of moulding provide a tight fit against the valve housing and to press in the moulding mass through one or more of the cores.

By the method for mounting a valve which in the valve body has a flow passage of circular cross-section it is moreover advantageous to retain the valve body by means of moulding cores providing a tight fit along the two rims of the flow passage through the valve.

It is furthermore advantageous by the method for mounting a valve to let valve body and valve housing be of metal and as moulding mass to use a plastic material, e.g. polyvinylchloride or polyamide, having good bearing properties relative to metal.

The application also relates to a tool for use by carrying out the mentioned methods which tool is for mounting a valve body with cylindrical flow passage in a valve housing having straight passage along the axis of the passage when the valve body is in open position wherefore the tool for this use has two cores which are adapted to be movable towards each other along the said axis in that each core is designed with an outer and an inner shoulder where the outer shoulder is adapted to be engagable with one rim of the flow passage of the valve body and where the inner shoulder is adapted to be engagable with a shoulder provided in the flow passages of the housing.

By the tool according to the application it is advantageous that the inner shoulders are designed with a conical surface for engagement with the shoulders in the flow passage in the housing.

The tool will in the following be further explained with reference to the embodiments shown in the drawing of a ball plug valve according to the application where

Fig. 1 shows a longitudinal section of a first embodiment of a valve along the line I-I in Fig. 2,

Fig. 2 shows a cross-section of the valve shown in Fig. 1 along the line II-II in Fig. 1,

Fig. 3 shows a top view of the same valve in the direction of the arrow III in Fig. 1,

Figs. 4-6 in the same manner as Figs. 1-3 show another embodiment of a valve according to the invention,

Fig. 7 shows a tool where the valve body is mounted from above,

Fig. 8 shows a tool where the valve body is mounted from the side.

The embodiments shown in the drawing of valves according to the application are both ball plug valves of the kind used as closing valve for water taps and similar valves so that it is possible on these to change packings and make other maintenance work without having to close the main valve of the system. The application is of course not limited to use in this particular field.

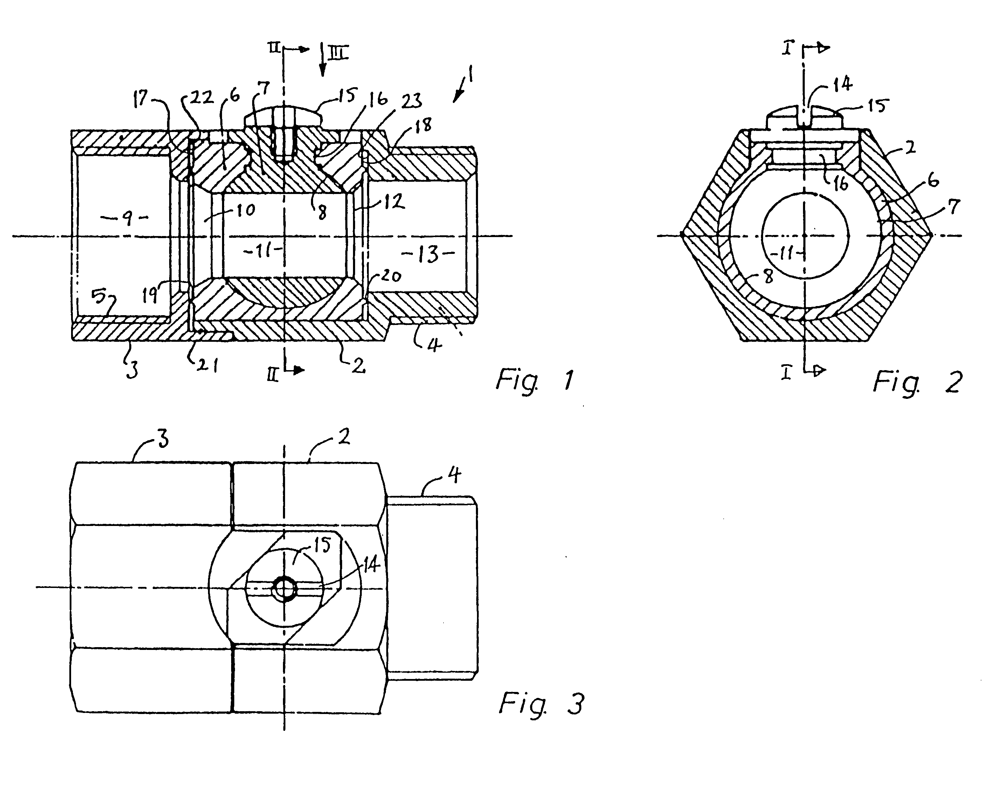

The valve 1 shown in Figs. 1-3 comprises a two-piece valve housing consisting of a first valve housing part 2 and a second valve housing part 3. The first valve housing part 2 is designed with an external thread 4 whereas the second valve housing part 3 is designed with an internal thread 5. In the shown embodiment the valve housing consisting of the two valve housing parts 2 and 3 may be described as an outer valve housing enclosing an inner valve housing 6.

A ball plug 7 is pivotably embedded within the inner valve housing 6 wherein for this purpose there is a bearing surface 8. When the ball plug 7 is in the shown open position, the water may flow for example from left to right through an inlet passage 9, a first opening 10 in the inner valve housing 6, a flow passage 11 in the ball plug 7, a second opening 12 in the inner valve housing 6 and an outlet passage 13. As will be seen in Fig. 1 the inlet and outlet passages 9 and 13, respectively, are provided in the second respectively the first valve housing part 3 and 2, respectively. From the shown open position the ball plug 7 can be turned through 90° to a not shown closed position wherein it will shut off the fluid connection between the inlet passage 9 and the outlet passage 13. The ball plug 7 can in the shown example be turned by means of a not shown screwdriver which can be inserted in the slot 14 in the head 15 of the neck part 16 of the ball plug 7 shown in Figs. 2 and 3.

It is obvious that if the inner valve housing 6 and the ball plug 7 were both manufactured in each its individual piece, it would be impossible to mount the ball plug 7 in the shown position in the inner valve housing 6. In hitherto known valves this problem is usually solved by designing the inner valve housing 6 in two parts, for example with the parting face extending perpendicularly to the longitudinal axis of the valve. The provision of a two-part inner valve housing involves, however, partly that the work of assembling the valve is complicated and partly that problems arise in relation to sealing between the various parts since there must be both fluid tightness between the two halves of the inner valve housing and a fluid tight engagement between the inner valve housing and the ball plug. These problems are according to the application avoided by the fact that the inner valve housing 6 is moulded around the ball plug 7. In the shown example the inner valve housing 6 is moulded around the ball plug 7 by using a separate mould complete with cores for keeping clear the openings 10 and 12 in that the mould is designed in such a manner that circular elevations 19 and 20 will be made on the end faces 17 and 18 of the inner valve housing 6. When the valve housing parts 2 and 3, which together form the outer valve housing, are joined as shown by a joint 21, which may be a thread joint or a glued joint, contact faces 22 and 23 on the second and the first valve housing part 3 and 2, respectively, will under a certain pressure engage the circular elevations 19 and 20 and thereby provide the required sealing between the inner flow chamber of the valve and its surroundings.

It is also possible in another manner to mould the inner valve housing 6 around the ball plug 7 in such a manner that when the inner valve housing 6 with the embedded ball plug 7 is inserted in the outer valve housing and this is clamped around the inner valve housing, the inner valve housing 6 is to a certain degree compressed whereby the contact pressure and thus the sealing between the inner valve housing 6 and the ball plug 7 is improved. For less demanding uses it is also possible to mould the outer valve housing integrally with the inner valve housing. As moulding material for the inner valve housing, if desired the inner and the outer valve housing, there may be used a suitable plastic material and as examples may be mentioned polyvinylchloride (PVC) or polyamide. As material for the ball plug 7 there may be used brass which may also be used for the outer valve housing when this is not moulded together with the inner valve housing. In order to facilitate turning of the ball plug 7 the surface thereof engaging the surfaces on the inner valve housing 6 may be polished and/or plated with a suitable coating such as chrome or a slip agent may be applied thereto.

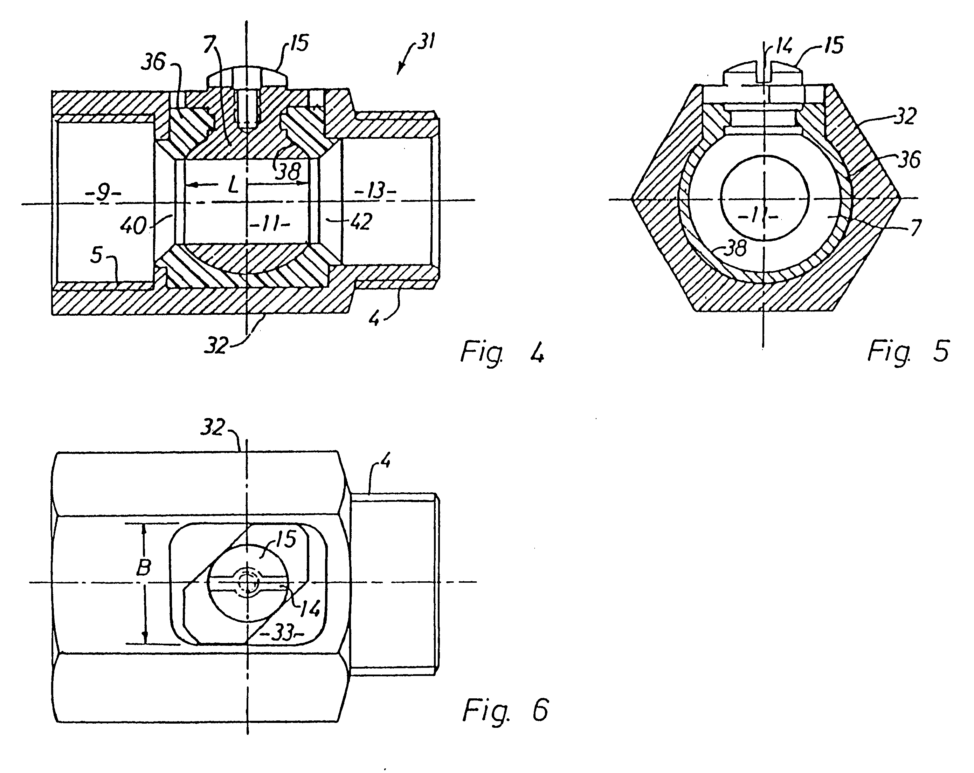

In the embodiment shown in Figs. 4-6 the valve 31 is in the main designed in the same manner as the valve 1 shown in Figs. 1-3 and the ball plug 7 is designed in exactly the same way. However, in this valve the outer valve housing 32 is designed in one single piece which is possible in this case because the ball plug may be inserted through a side opening 33 designed in the valve housing 32, which side opening 33 is preferably just so wide that the ball plug 7 may be inserted in the valve housing 32 – forming in this case the outer valve housing – and after the insertion be covered by a moulding mass for forming the inner valve housing 36. By means of suitable cores which are introduced into the flow passage 11 through the inlet passage 9 and the outlet passage 13, respectively, designed in the ball plug 7 there may be moulded a first and a second opening 40 and 43, respectively, corresponding to the openings 10 and 12 shown in Fig. 1. The bearing surface formed by the moulding in the inner valve housing 36 is here indicated by 38 and corresponds to the bearing surface 8 shown in Fig. 1.

The side opening 33 through which the ball plug 7 is inserted in the outer valve housing 32 is as mentioned above designed with such dimensions as to just allow the ball shaped part of the ball plug 7 to pass through. In order to avoid unnecessary weakening of the outer valve housing the opening 33 is as shown preferably oriented in such a manner that its smallest dimension B which is somewhat larger than the corresponding smallest dimension L of the ball plug is oriented across the longitudinal axis of the valve.

The parts of the valve shown in Figs. 4-6 having the same reference numerals as in Figs. 1-3 moreover correspond to the parts of the valve shown in Figs. 1-3 having these reference numerals.

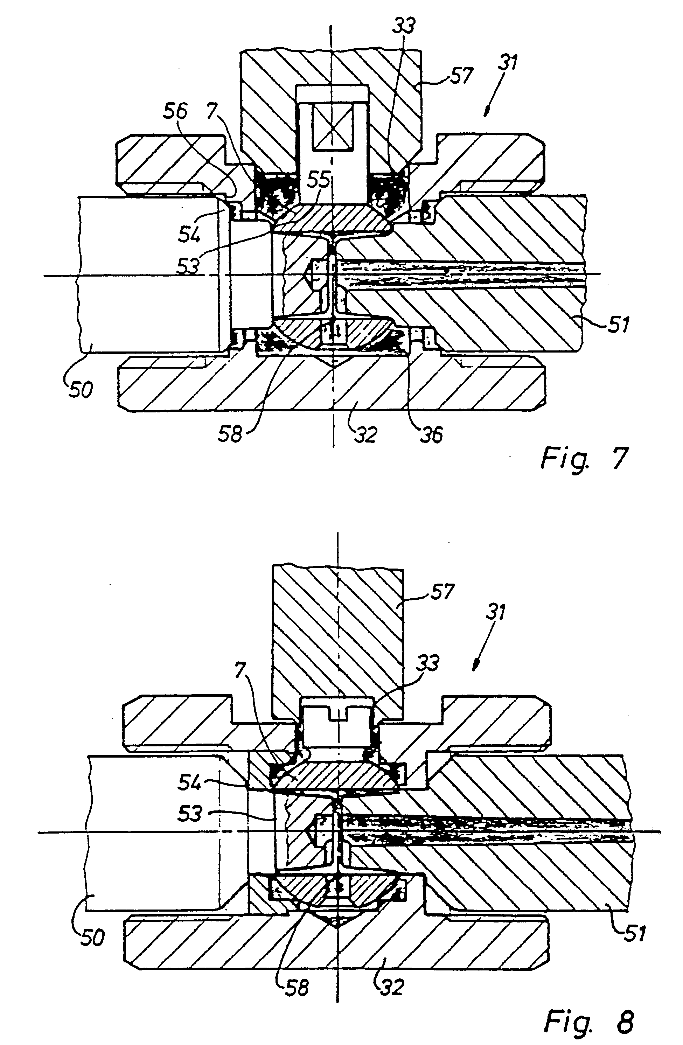

In Fig. 7 there is shown a tool for use by mounting a ball plug valve where the valve body is mounted through a side opening 33. The tool comprises two cores 50, 51 which are adapted to be moveable towards and away from each other along an axis which axis corresponds to a cylindrical flow passage in a valve housing with a straight passage. Each of the two cores 50, 51 is at least by the mutually facing end designed as bodies of revolution having a circular cross-section about an axis coinciding with said axis, and both cores 50, 51 are designed with an axial outer 53 and inner shoulder 54 where the axial outer shoulder 53 is adapted to engage one of the rims 55 of the flow passage of the valve body and where the axial inner shoulder 54 is adapted to be engagable with a shoulder 56 provided in the flow passage of the housing. Before applying the tool, the valve body is inserted through the side opening 33 in the valve housing whereafter the valve housing 32 with the previously mounted valve body is inserted with the flow passage enclosing the core 50. The core 50 with the mounted valve housing 32 is then moved relatively to the core 51 in such a manner that both cores 50, 51 are in engagement with the valve housing 32. The tool moreover comprises a plug 57 whose longitudinal axis is at right angles to the said common axis of the cores 50, 51. This plug 57 has a recess which is adapted to receive the control lever on the valve housing and the plug 57 is adapted to rest on the servicing opening 33 in the valve housing 32. The tool moreover comprises means which are adapted to inject a suitable plastic mixture into the valve 31 in that this injection may for example take place through an axial passage in the core 51. After cooling of the valve housing 32 and the injected plastic mass the mould may be opened by withdrawing the cores 50, 51 and the plug 57 in each its direction whereby the valve housing 57 with the valve body 7 moulded therein can be removed from the mould.

By further processing the inlet pin with appendage may be pressed out of the valve housing 32 whereby the outlet is broken by the reference numeral 58 whereafter the valve 31 with valve body 7 mounted therein is complete.

Fig. 8 shows a similar tool where the valve body 7 is adapted to be inserted through the flow passage. This tool comprises likewise two cores 50, 51 and a plug 57 which can grip over the control lever on the valve body 7, and this tool is moreover substantially adapted in the same manner as the tool shown in Fig. 7 and the tool is used in the same manner as said tool.

The application is of course not limited to use by ball plug valves in that the advantageous effect of moulding one of the two mutually cooperating parts in a valve against the other part may also be achieved by valves of another kind, for example plug valves with cylindrical or conical plugs or valves wherein the movement of the valve body is translative, such as slide and piston valves. It is also within the scope of the application to mould the movable valve part or the valve body between the faces in the valve housing with which said part or said body is to cooperate. This is relatively easy in a plug valve with conical or cylindrical plug in that a throughcore may in that case be arranged in the inlet and outlet passage and extend through the space between them so that the valve plug by moulding around this core will be provided with the required flow passage. By means of suitable removable moulding parts arranged on top of the valve housing there may in that case also be moulded a handle on the valve plug.

## Claims

1. Method for mounting a valve body having the shape of a body of revolution in a valve housing where there are great tolerances between the two parts, characterised by retaining the two parts in correct interrelationship, temporarily closing the valve housing in relation to its outer surroundings and by subsequently filling the spaces between the valve body and the valve housing with a moulding mass which is anchored in the valve housing.

2. Method according to claim 1, characterised by using a fusible or meltable moulding mass which is pressed in its liquid state and by using as a valve body and a valve housing a valve body and a valve housing made of materials having a melting point which is higher than the melting point of the moulding mass.

3. Method according to claim 1, characterised by using a chemically hardenable moulding mass.

4. Method according to claim 1, 2 or 3, characterised by retaining the parts in interrelationship by means of cores which in the position of moulding provide a tight fit against the valve housing and by pressing in the moulding mass through one or more of the cores.

5. Method according to claim 4 and where the flow passage in the valve body is cylindrical, characterised by retaining the valve body by means of moulding cores providing a tight fit along the two rims of a flow passage through the valve.

6. Method according to one or more of claims 1 to 5, characterised by letting valve body and valve housing be of metal and the moulding mass of a plastic material such as polyvinylchloride or polyamide having good bearing properties relative to metal.

7. Tool for use by carrying out the method according to one or more of the preceding claims and for mounting a valve body with cylindrical flow passage in a valve housing having straight passage along the axis of the passage when the valve body is in its open position, characterised in that the tool comprises two cores which are adapted to be movable towards each other along the said axis in that each core is designed with an axial outer and inner shoulder where the axial outer shoulder is adapted to engage one of the rims of the flow passage of the valve body, and where the axial inner shoulder is adapted to engage a shoulder designed in the flow passage of the housing.

8. Tool according to claim 7, characterised in that the axial inner shoulders are designed with a conical surface for engagement with the shoulders in the flow passage of the housing.

## Patentansprüche

1. Verfahren zur Montage eines Ventilkörpers in der Gestalt eines Drehkörpers in einem Ventilgehäuse, bei dem grosse Spielräume zwischen den beiden Teilen bestehen, dadurch gekennzeichnet, dass die beiden Teile in der richtigen gegenseitigen Beziehung zueinander gehalten werden, das Ventilgehäuse bezüglich seiner äusseren Umgebung vorübergehend verschlossen wird und anschliessend die Räume zwischen dem Ventilkörper und dem Ventilgehäuse mit einer Pressmasse gefüllt werden, die in dem Ventilgehäuse verankert wird.

2. Verfahren gemäss Anspruch 1, dadurch gekennzeichnet, dass eine fliessfähige oder schmelzbare Pressmasse in ihrem flüssigen Zustand eingepresst wird und ein Ventilkörper und ein Ventilgehäuse aus Materialien mit einem Schmelzpunkt benutzt werden, der höher als der Schmelzpunkt der Pressmasse ist.

3. Verfahren gemäss Anspruch 1, gekennzeichnet durch eine Verwendung einer chemisch härtbaren Pressmasse.

4. Verfahren gemäss Anspruch 1, 2 oder 3, dadurch gekennzeichnet, dass die Teile in ihrer gegenseitigen Beziehung zueinander mit Hilfe von Kernen gehalten werden, die in der Pressstellung einen Haftsitz gegen das Ventilgehäuse liefern, und die Pressmasse durch einen oder mehrere Kerne eingepresst wird.

5. Verfahren gemäss Anspruch 4, bei dem der Durchflusskanal in dem Ventilkörper zylindrisch ist, dadurch gekennzeichnet, dass der Ventilkörper mit Hilfe von Presskernen gehalten wird, die längs der beiden Ränder eines Durchflusskanals durch das Ventil einen Haftsitz vorsehen.

6. Verfahren gemäss einem oder mehreren Ansprüchen 1 bis 5, dadurch gekennzeichnet, dass ein Ventilkörper und ein Ventilgehäuse aus Metall und die Pressmasse aus einem Kunststoff, z. B. Polyvinylchlorid oder Polyamid mit guten Lagereigenschaften bezüglich des Metalls verwendet werden.

7. Werkzeug zur Durchführung des Verfahrens gemäss einem oder mehreren vorhergehenden Ansprüchen und zur Montage eines Ventilkörpers mit einem zylindrischen Durchflusskanal in einem Ventilgehäuse mit einem geraden Durchgang längs dessen Achse, wenn sich der Ventilkörper in seiner geöffneten Stellung befindet, dadurch gekennzeichnet, dass das Werkzeug zwei Kerne enthält, die längs der Achse in Richtung aufeinander zu bewegbar sind, und dass jeder Kern mit einer axialen äusseren und inneren Schulter konstruiert ist, wobei die axiale, äussere Schulter in einen der Ränder des Durchflusskanals des Ventilkörpers und die axiale, innere Schulter in eine Schulter hineingreifen können, welche in dem Durchflusskanal des Gehäuses ausgeführt ist.

8. Werkzeug gemäss Anspruch 7, dadurch gekennzeichnet, dass die axialen inneren Schultern mit einer konischen Oberfläche zum Eingriff mit den Schultern in dem Durchflusskanal des Gehäuses konstruiert sind.

## Revendications

1. Procédé de montage d'un corps de robinet ayant la forme d'un corps de révolution dans une enveloppe de robinet, avec de grandes tolérances entre les deux pièces, caractérisé en ce qu'il consiste à retenir les deux pièces dans une disposition mutuelle correcte, à fermer temporairement l'enveloppe du robinet par rapport à son environnement extérieur et à remplir ensuite les espaces entre le corps du robinet et l'enveloppe du robinet au moyen d'une masse à mouler qui est ancrée dans l'enveloppe du robinet.

2. Procédé selon la revendication 1, caractérisé en ce qu'il consiste à utiliser une masse à mouler fusible ou pouvant fondre, qui est amenée par pression dans son état liquide, et à utiliser en tant que corps de robinet et enveloppe de robinet un corps de robinet et une enveloppe de robinet réalisés en des matières ayant un point de fusion plus élevé que le point de fusion de la masse à mouler.

3. Procédé selon la revendication 1, caractérisé en ce qu'il consiste à utiliser une masse à mouler chimiquement durcissable.

4. Procédé selon la revendication 1, 2 ou 3, caractérisé en ce qu'il consiste à retenir les pièces dans une disposition mutuelle au moyen de noyaux qui, dans la position de moulage, réalisent un ajustement serré contre l'enveloppe du robinet, et à introduire par pression la masse à mouler à travers un ou plusieurs des noyaux.

5. Procédé selon la revendication 4, dans lequel le passage d'écoulement dans le corps du robinet est cylindrique, caractérisé en ce qu'il consiste à retenir le corps du robinet au moyen de noyaux de moulage réalisant un ajustement serré le long des deux rebords d'un passage d'écoulement traversant le robinet.

6. Procédé selon une ou plusieurs des revendications 1 à 5, caractérisé en ce qu'il consiste à réaliser le corps de robinet et l'enveloppe de robinet en métal et la masse à mouler en une matière plastique telle que du polychlorure de vinyle ou un polyamide ayant de bonnes propriétés d'appui par rapport au métal.

7. Outil à utiliser dans la mise en œuvre du procédé selon une ou plusieurs des revendications précédentes et pour le montage d'un corps de robinet présentant un passage d'écoulement cylindrique dans une enveloppe de robinet présentant un passage droit le long de l'axe du passage lorsque le corps de robinet est dans sa position ouverte, caractérisé en ce que l'outil comprend deux noyaux qui sont conçus pour pouvoir être rapprochés l'un de l'autre le long dudit axe, en ce que chaque noyau est conçu de façon à présenter des épaulements axiaux extérieur et intérieur, l'épaulement axial extérieur étant conçu pour porter contre l'un des rebords du passage d'écoulement du corps du robinet et l'épaulement axial intérieur étant conçu pour contacter un épaulement prévu dans le passage d'écoulement de l'enveloppe.

8. Outil selon la revendication 7, caractérisé en ce que les épaulements axiaux intérieurs sont conçus de façon à présenter une surface conique destinée à porter contre les épaulements situés dans le passage d'écoulement de l'enveloppe.

Fig. 2

Fig. 1

Fig. 3

Fig. 4

Fig. 5

Fig. 6

EP 0 260 288 B1

Fig. 7

Fig. 8